# EUROPEAN PATENT SPECIFICATION

(11) **EP 0 474 308 B1**
(45) Date of publication and mention of the grant of the patent: **08.01.1997**
(21) Application number: 91202257.1
(22) Date of filing: 04.09.1991
(51) Int. Cl.: C08K 9/06, C08L 73/00

(54) **Reinforced thermoplastic composites**
Verstärkte thermoplastische Materialien
Composites renforcés thermoplastiques

(30) Priority: 06.09.1990 US 579433; 06.09.1990 US 579135; 06.09.1990 US 579136
(43) Date of publication of application: 11.03.1992
(73) Proprietor: SHELL INTERNATIONALE RESEARCH MAATSCHAPPIJ B.V., 2596 HR Den Haag (NL)
(72) Inventor: Hanley, Stephen John, Whippany, New Jersey 07981 (US); Dolce, Thomas Joseph, Stirling, New Jersey 07981 (US)

(56) References cited:
- EP-A- 0 322 959
- US-A- 3 803 069

## Description

This invention relates to a reinforced thermoplastic composite. More particularly, the invention relates to such a composite based on linear alternating polyketone polymers reinforced with inorganic fibrous materials, and to a process for its preparation.

The class of linear alternating polymers of carbon monoxide and at least one ethylenically unsaturated compound is known in the art. More recently, this class of linear alternating polymers, now becoming known as polyketones or polyketone polymers, has become of greater interest in part because of the greater availability of the polymers.

The polymers are relatively high molecular weight materials having established utility as premium thermoplastics. The polyketone polymers are processed by methods conventional for thermoplastics such as extrusion, injection moulding and thermo-forming into a variety of shaped articles such as containers for food and drink and parts and housings for automotive applications. For some particular applications, however, it has been found to be desirable to have properties which are somewhat different from those of the polyketone polymer. It would be of advantage to retain the more desirable properties of the polyketone polymers and yet improve other properties, for example, the tensile strength.

One proposal for obtaining polyketone polymers of greater tensile strength is through the use of an internal reinforcement. European patent application No. EP-A-322959 discloses reinforced polyketone polymers wherein the reinforcement is in the form of inorganic, especially glass fibres. The success of glass fibres as a reinforcement depends in part upon the compatibility of the glass with the polymer. The compatibility in turn often depends upon the coating or sizing applied to the glass prior to incorporation into the reinforced polymer. It is an object of the present invention to provide for glass fibre reinforced polyketone polymers of improved properties by having a particular sizing on the fibres.

It has now been found that polymers having a limiting viscosity number (LVN) between 0.8 and 1.35 dl/g reinforced by glass fibres having a particular aminosilane-type and polyurethane sizing, have a higher tensile strength than when glass fibres containing polymer of higher LVN is employed.

Thus the invention relates to a reinforced thermoplastic composite characterized by comprising a linear alternating polymer of at least one ethylenically unsaturated compound and carbon monoxide having an LVN between 0.8 and 1.35 dl/g, as measured in m-cresol at 60°C, and a glass fibre reinforcement having a coating of a sizing material, wherein the sizing material comprises both aminosilane and polyurethane functionalities.

The reinforced polymers of the invention are linear alternating polymers of carbon monoxide and at least one ethylenically unsaturated compound, especially a hydrocarbon. Ethylenically unsaturated hydrocarbons which are suitably employed as comonomers have up to 20 carbon atoms inclusive, preferably up to 10 carbon atoms inclusive, and are aliphatic such as ethene and other α-olefins including propene, 1-butene, isobutene, 1-hexene, 1-octene and 1-dodecene or are arylaliphatic containing an aryl substituent on an otherwise aliphatic molecule, particularly an aryl substituent on a carbon atom of the ethylenic unsaturation. Illustrative of this latter type of ethylenically unsaturated hydrocarbon are styrene, p-methylstyrene, p-ethylstyrene and m-propylstyrene. The preferred polyketone polymers are copolymers of carbon monoxide and ethene or terpolymers of carbon monoxide, ethene and a second ethylenically unsaturated hydrocarbon of at least 3 carbon atoms, particularly an α-olefin such as propene.

When the preferred terpolymers are to be employed in the reinforced polymers of the invention, there will be at least two units incorporating a moiety of ethylene for each unit incorporating a moiety of the second hydrocarbon. Preferably, there will be from about 10 units to about 100 units incorporating a moiety of ethylene for each unit incorporating a moiety of the second hydrocarbon. The polymeric chain of the preferred polyketones is therefore represented by the repeating formula 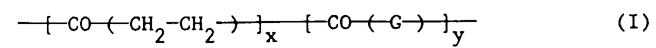 wherein G is a moiety of the second ethylenically unsaturated hydrocarbon of at least 3 carbon atoms polymerized through the ethylenic unsaturation thereof and the ratio of y:x is no more than 0.5. When the preferred copolymers are to be employed there will be no second hydrocarbon present and the copolymers are represented by the above formula I wherein y is zero. When y is other than zero, i.e., terpolymers are employed, the -CO(̵CH₂CH₂)̵ units and the -CO(̵G)̵ units are found randomly along the polymer chain and the preferred ratios of y:x are from 0.01 to 0.1. The end groups or "caps" of the polymer chain will depend upon what materials were present during the preparation of the polymer and whether and how the polymer was purified. The precise nature of the end groups does not appear to influence the properties of the polymer to any considerable extent so that the polymers are fairly represented by the formula for the polymer chain as depicted above.

Of particular interest are the polyketone polymers of number average molecular weight from 1000 to 200,000, particularly those of number average molecular weight from 20,000 to 90,000, as determined by gel permeation chromatography. The physical properties of the polymers will depend in part upon the molecular weight, whether the polymer is a copolymer or a terpolymer and, in the case of terpolymers, the nature of and the proportion of the second hydrocarbon present. Typical melting points for the polymers are from 175 °C to 300 °C, more particularly from 210 °C to 270 °C. The polymers have a limiting viscosity number (LVN), measured in a standard capillary viscosity measuring device in m-cresol at 60 °C between 0.8 dl/g and 1.35 dl/g. It was found that polymers having an LVN between 1.0 dl/g and 1.3 dl/g are most suitable for the preparation of the present composites.

The general methods for producing the polyketone polymers are illustrated in U.S. patent Nos. 4,843,144 and 4,880,903. The carbon monoxide and ethylenically unsaturated hydrocarbon are contacted in the presence of a catalyst composition preferably formed from a compound of palladium, the anion of a non-hydrohalogenic acid having a pKa, measured in water at 18 °C, of below 2 and a bidentate ligand of phosphorus.

The polymers of the invention are reinforced by the presence therein of glass fibre having a particular type of coating or sizing. The term "glass" is employed in the conventional meaning to indicate that class of complex metal silicates which are commonly referred to as glasses. Although the addition of rare earth metal oxides or transition metal oxides to other metal silicates on occasion will produce a glass of rather exotic properties, the glass from which the glass fibre of the invention is produced is the more common alkali metal or alkaline earth metal silicate glass, particularly a silicate glass illustratively containing one or more of aluminium, calcium, boron and magnesium oxides. Fibres produced of such glass are conventional and are commercially available. However, specific dimensions of the glass are preferred as they can be used more successfully in the reinforced polymers of the invention and of particular importance is the nature of the material used as sizing or coating of the glass.

In the reinforced polymers of the invention, the glass fibres used as reinforcement are preferably chopped glass fibres of circular cross-section. The fibres preferably range in diameter from 5 microns to 20 microns, more preferably from 8 microns to 15 microns. Fibres of greater or lesser diameter can also be used but fibres of too small a diameter can sometimes not provide the required strength and fibres of too large a diameter can contribute too much weight for the resulting increase in strength. Although in some applications the presence of long continuous strands of glass may be beneficial, it is preferred in the reinforced polymers of the invention to use short fibres of glass. Lengths of glass fibre from 2.5 mm to 12.5 mm are preferred. While longer or shorter lengths are also useful, too long a length of glass fibre can detract from the processability of the polymer-glass mixture while too short a length of fibre sometimes does not provide the desired strength. It is recognized that the actual length of the glass fibres in the reinforced polymer will depend to some extent upon the method of blending or mixing the polymer and the glass fibres as this process may mechanically reduce the length of the fibres.

The glass fibres which are to be used as reinforcement for plastic materials will have a coating of a material termed a sizing material or sizing agent. Without wishing to be bound by any particular theory, it appears likely that the sizing material serves as a type of "coupling agent" to influence the nature of the interfacial shear strength of the fibre and the polyketone polymer. Expressed differently, the nature of the sizing material will influence the compatibility of the polymer and the glass fibre or how well the polymer and fibre will adhere. For a fibre to contribute strength to a reinforced polymer, the interfacial shear strength will be at least comparable to the shear strength of the polymer so that there will be good adhesion between the polymer and the glass fibre. This interfacial shear strength will be influenced by the polarity of the polymer and a sizing material that works well for one polymer will not necessarily work well with other polymers. Sizings are generally characterized by the general nature of the size rather than by the specific chemical structure which is often proprietary to the glass fibre manufacturer. Moreover, the characterization of the sizing material is often in terms of the types of substituents attached to the terminal portions of a hydrocarbon chain without identifying the specific groups present. Such characterization is well understood in the art. In order to reinforce the linear alternating polymers, glass fibres having a variety of sizings are useful. However, when the fibres are treated with a particular type of sizing material, the reinforced polymers which result have particularly good tensile strength. The sizing agent used for the glass fibres of the present invention combine aminosilane moieties in a size of the polyurethane type.

The precise nature of the sizing agents employed in the reinforced polymers of the invention is somewhat uncertain. Sizing agents typically contain an organic film former, an organofunctional silane, antistatic agents and lubricants. It is considered likely that the silane contains a chain of up to 3 methylene groups with silane functionality on one end and amine functionality on the other. The silane functionality comprises a mono-, di- or triaminosilane group, or mixtures thereof. The polyurethane functionality is preferably derived from epoxy or ester groups and contains aliphatic and aromatic groups. The sizing agent is applied to the glass surface via an aqueous solution which hydrolyzes the silane and disperses the film former. The hydrolyzed silane group condenses with similar silanol groups on the surface of the glass fibre and the amino functionality reacts with the polymeric film former which contains the polyurethane and the optional epoxy functionality. The sizing agents employed in the reinforced polymers of the invention contain aminosilane and polyurethane functionalities and optionally an epoxy functionality. This combination serves to distinguish the sizing agents of the invention from other related sizing agents. Fibres coated with such sizing agents are commercially available, and suitable sizings are described in e.g. EP-B-201691.

The glass fibres can be employed in a quantity of from 1% by weight to 45% by mass based on the total mass of the composite. Quantities of glass fibre from 10% by mass to 35% by mass on the same basis are preferred.

The present invention also relates to a process for the preparation of a reinforced thermoplastic composite, comprising mixing a linear alternating polymer of at least one ethylenically unsaturated compound and carbon monoxide having an LVN between 0.8 and 1.35 dl/g, and a glass fibre reinforcement having a coating of a sizing material, and converting the mixture to a reinforced composite by application of heat and/or pressure, wherein the sizing material comprises both aminosilane and polyurethane functionalities. The method of producing the fibre reinforced polymers is not material so long as an intimate mixture of the components is obtained without undue degradation of the components or the reinforced polymer. The glass fibres are often obtained with the desired sizing already present from the fibre manufacturer. Alternatively, a glass fibre free of sizing agent can be coated with the sizing at the same time that the glass fibres are mixed with the polymer. In one embodiment the components are dry mixed and converted to a reinforced polymer by application of heat and pressure. In an alternative embodiment the components are passed through an extruder to obtain the reinforced polymer as an extrudate. The components are also mixed by operation of a blender operating at elevated temperature at high shear.

The reinforced polymers of the invention may also include conventional additives such as stabilizers, antioxidants, mould release agents, fire retardant materials and processing aids which are designed to improve the processability of the components or reinforced polymer or to improve the properties thereof. Such additives are added together with, prior to, or subsequent to, the mixing of the sized glass fibres and polymer.

A particularly useful processing aid comprises a polymer containing moieties of an α-olefin and an α,β-ethylenically unsaturated carboxylic acid which optionally may be partially neutralized with metal ions. Good results have been obtained with a partially zinc, magnesium or calcium neutralized acidic polymer containing moieties of an α-olefin and an α,β-ethylenically unsaturated carboxylic acid, more specifically a copolymer of ethene and an α,β-ethylenically unsaturated carboxylic acid of up to 4 carbon atoms inclusive. Preferably, the carboxylic acid groups of the acidic polymer are from 10 to 90% neutralized with zinc, magnesium or calcium ions. Illustrative of these polymers are the copolymers of ethylene and acrylic acid or methacrylic acid which are commercially available or the class of zinc or calcium partially neutralized polymers known as ionomers. The partially neutralized acidic polymer is preferably present in a quantity of between 0.01 and 10% by mass, based on the total mass of the partially neutralized acidic polymer and the linear alternating polymer.

The glass fibre reinforced polyketone polymers of the invention are uniform mixtures with improved properties such as tensile strength. The reinforced polymers are therefore particularly useful where moulded or otherwise shaped articles are desired which require strength. Illustrative of such applications are the production of both internal and external components and housings for automotive applications and structural parts for applications in the construction industry.

The invention is further illustrated by the following Examples which should not be regarded as limiting.

### Example I

A number of reinforced polymers was produced from two linear alternating terpolymers of carbon monoxide, ethylene and propylene, one having a limiting viscosity number in m-cresol at 60 °C of 1.14 dl/g (Polymer C) and the other having a limiting viscosity number in m-cresol at 60 °C of 1.79 (Polymer D). The polymers contained glass fibre "F", known as PPG 22517 and containing aminosilane, polyurethane and epoxy functionality. The tensile strengths of these composites were determined and the results are shown in Table IV.

**TABLE IV**

| Composite | Polymer | Screw Speed, RPM | Melt Temp.,°C | Glass Level, %wt | Tensile Strength MPa |
|---|---|---|---|---|---|
| 1 | C | 45 | 245 | 15 | 80.7 |
| 2 | D | 45 | 245 | 15 | 68.9 |
| 3 | C | 100 | 245 | 15 | 71.7 |
| 4 | D | 100 | 245 | 15 | 68.9 |
| 5 | C | 45 | 280 | 15 | 88.3 |
| 6 | D | 45 | 280 | 15 | 81.4 |
| 7 | C | 100 | 280 | 15 | 77.2 |
| 8 | D | 100 | 280 | 15 | 75.2 |

It may be seen that the lower LVN material gives the best results in terms of tensile strength.

### Example II

Reinforced polymer composites of Polymers D and C were produced containing 30% by weight of the fibre glass identified as "F" in Example I and all reinforced polymers contained, as a processing aid, 1% by weight of a partially Zn neutralized acidic copolymer of ethylene and methacrylic acid. Various mechanical properties of the resulting composites were determined by conventional methods and are shown in Table V. Also shown for comparative purposes are the values for the unfilled polymers (containing no glass).

**TABLE V**

| Properties | Unfilled | Reinforced Polymer D | Reinforced Polymer C |
|---|---|---|---|
| Tensile Strength, MPa | 58.6 | 111.0 | 131.7 |
| Elongation at Break, % | 300 | 3 | 3 |
| Tensile Modulus, GPa | 1.35 | 6.55 | 6.96 |
| Flexural Strength, MPa | 55.2 | 175 | 203 |
| Flexural Modulus, GPa | 1.56 | 6.58 | 7.17 |
| Izod Impact Strength, m.kg/m | 16 | 15 | 13 |
| Gardner Impact Strength, cm.kg | >370 | 4.6 | 6.9 |
| Heat Deflection Temp., °C at 1.82 MPa | 90 | 202 | 211 |

### Example III

Reinforced blends were produced by passing a mixture of the linear alternating terpolymer termed Polymer C in Example I, a partially neutralized acidic polymer and the fibre glass termed "F" through a twin screw extruder. All blends thus produced contained 69% by weight of the linear alternating terpolymer, 30% by weight of the fibre glass and 1% by weight of a partially neutralized acidic polymer of ethylene and methacrylic acid supplied by DuPont under the SURLYN trademark or an ethylene/-acrylic acid copolymer supplied by Allied-Signal under the ACLYN trademark. The partially neutralized copolymers differed in molecular weight, percent composition and/or degree of neutralization. The mechanical properties of the reinforced blends were determined by conventional methods and are reported in Table VI. Also determined as the control were the properties of the terpolymer reinforced with the fibre glass but not containing partially neutralized acidic polymer.

**TABLE VI**

| Partially Neutralized Acidic Polymer | Metal Salt | Tensile Strength, MPa | Flexural Strength, MPa | Flexural Modulus, GPa |
|---|---|---|---|---|
| Control | None | 116 | 172 | 6.47 |
| SURLYN 9020 | Zn | 123 | 184 | 6.52 |
| SURLYN 9450 | Zn | 126 | 188 | 6.61 |
| SURLYN 9650 | Zn | 119 | 183 | 6.36 |
| SURLYN 9720 | Zn | 116 | 180 | 6.47 |
| SURLYN 9970 | Zn | 114 | 177 | 6.29 |
| ACLYN 201A | Ca | 132 | 199 | 6.87 |
| ACLYN 246A | Mg | 112 | 174 | 6.74 |
| ACLYN 291A | Zn | 128 | 191 | 6.79 |
| ACLYN 295A | Zn | 125 | 190 | 6.67 |

## Claims

1. Reinforced thermoplastic composite characterized by comprising a linear alternating polymer of at least one ethylenically unsaturated compound and carbon monoxide having a limiting viscosity number between 0.8 and 1.35 dl/g, as measured in m-cresol at 60 °C, and a glass fibre reinforcement having a coating of a sizing material, wherein the sizing material comprises both aminosilane and polyurethane functionalities.

2. A composite as claimed in claim 1, characterized in that the sizing material comprises epoxy functionalities in addition.

3. A composite as claimed in claim 1 or 2, characterized in that the linear alternating polymer is an ethene/carbon monoxide copolymer, or a terpolymer having the repeating formula
--[-CO-(-CH₂CH₂-)-]ₓ----[--CO-(-G-)-]_{y}-- (I)
wherein G is a moiety of a second ethylenically unsaturated hydrocarbon of at least three carbon atoms polymerized through the ethylenic unsaturation thereof and y:x ≤ 0.5.

4. A composite as claimed in claim 3, characterized in that it comprises also a partially zinc, magnesium or calcium neutralized acidic polymer containing moieties of an α-olefin and an α,β-ethylenically unsaturated carboxylic acid.

5. A composite as claimed in claim 4, characterized in that the acidic polymer is a copolymer of ethene and an α,β-ethylenically unsaturated carboxylic acid of up to 4 carbon atoms inclusive.

6. A composite as claimed in claim 4 or 5, characterized in that the carboxylic acid groups of the acidic polymer are from 10 to 90% neutralized with zinc, magnesium or calcium ions.

7. A composite as claimed in any of claims 4-6, characterized in that the partially neutralized acidic polymer is present in a quantity of between 0.01 and 10% by mass, based on the total mass of the partially neutralized acidic polymer and the linear alternating polymer.

8. A composite as claimed in any of claims 1 to 7, characterized in that it comprises between 1 and 45% by mass of the glass fibre reinforcement, based on the total mass of the composite.

9. Process for the preparation of a reinforced thermoplastic composite, comprising mixing a linear alternating polymer of at least one ethylenically unsaturated compound and carbon monoxide having a limiting viscosity number between 0.8 and 1.35 dl/g, as measured in m-cresol at 60 °C, and a glass fibre reinforcement having a coating of a sizing material, and converting the mixture to a reinforced composite by application of heat and/or pressure, wherein the sizing material comprises both aminosilane and polyurethane functionalities.

## Patentansprüche

1. Verstärkter thermoplastischer Verbundwerkstoff, dadurch gekennzeichnet, daß er ein lineares alternierendes Polymerisat aus mindestens einer ethylenisch ungesättigten Verbindung und Kohlenmonoxid mit einer Grenzviskositätszahl von 0,8 bis 1,35 dl/g, gemessen in m-Kresol bei 60°C, und eine Glasfaserverstärkung mit einer Beschichtung aus einem Schlichtematerial enthält, wobei das Schlichtematerial sowohl Aminosilan- als auch Polyurethanfunktionalitäten enthält.

2. Verbundwerkstoff nach Anspruch 1, dadurch gekennzeichnet, daß das Schlichtematerial zusätzlich noch Epoxidfunktionalitäten enthält.

3. Verbundwerkstoff nach Anspruch 1 oder 2, dadurch gekennzeichnet, daß es sich bei dem linearen alternierenden Polymerisat um ein Copolymerisat aus Ethen und Kohlenmonoxid oder um ein Terpolymerisat mit der wiederkehrenden Formeleinheit
--[-CO-(-CH₂CH₂-)-]ₓ----[--CO-(-G-)-]_{y}-- (I)
worin G eine über die ethylenische Doppelbindung einpolymerisierte Einheit eines zweiten ethylenisch ungesättigten Kohlenwasserstoffs mit mindestens drei Kohlenstoffatomen darstellt und y:x ≤ 0,5 ist, handelt.

4. Verbundwerkstoff nach Anspruch 3, dadurch gekennzeichnet, daß er zusätzlich ein teilweise mit Zink, Magnesium oder Calcium neutralisiertes acides Polymerisat, das Einheiten eines α-Olefins und einer α,β -ethylenisch ungesättigten Carbonsäure enthält, enthält.

5. Verbundwerkstoff nach Anspruch 4, dadurch gekennzeichnet, daß es sich bei dem aciden Polymerisat um ein Copolymerisat aus Ethen und einer α,β-ethylenisch ungesättigten Carbonsäure mit bis zu einschließlich 4 Kohlenstoffatomen handelt.

6. Verbundwerkstoff nach Anspruch 4 oder 5, dadurch gekennzeichnet, daß die Carbonsäurengruppen des aciden Polymerisats zu 10 bis 90% mit Zink-, Magnesiumoder Calciumionen neutralisiert sind.

7. Verbundwerkstoff nach einem der Ansprüche 4-6, dadurch gekennzeichnet, daß das teilweise neutralisierte acide Polymerisat in einer Menge von 0,01 und 10 Masse-%, bezogen auf die Gesamtmasse des teilweise neutralisierten aciden Polymerisats und des linearen alternierenden Polymerisats, vorliegt.

8. Verbundwerkstoff nach einem der Ansprüche 1 bis 7, dadurch gekennzeichnet, daß er 1 bis 45 Masse-% an Glasfaserverstärkung, bezogen auf die Gesamtmasse des Verbundwerkstoffs, enthält.

9. Verfahren zur Herstellung eines verstärkten thermoplastischen Verbundwerkstoffs, bei dem man ein lineares alternierendes Polymerisat aus mindestens einer ethylenisch ungesättigten Verbindung und Kohlenmonoxid mit einer Grenzviskositätszahl von 0,8 bis 1,35 dl/g, gemessen in m-Kresol bei 60°C, mit einer Glasfaserverstärkung mit einer Beschichtung aus einem Schlichtematerial vermischt und die Mischung durch Anwendung von Wärme und/oder Druck in einen verstärkten Verbundwerkstoff umwandelt, wobei das Schlichtematerial sowohl Aminosilan- als auch Polyurethanfunktionalitäten enthält.

## Revendications

1. Matériau composite thermoplastique renforcé, caractérisé en ce qu'il comprend un polymère alternant et linéaire d'au moins un composé à insaturation éthylénique et du monoxyde de carbone, possédant un indice de viscosité limite compris entre 0,8 et 1,35 dl/g, tel que mesuré dans le m-crésol à 60°C et un renforcement de fibres de verre possédant un revêtement d'une matière d'ensimage, où la matière d'ensimage comprend à la fois des fonctionnalités aminosilane et des fonctionnalités polyuréthanne.

2. Matériau composite suivant la revendication 1, caractérisé en ce que la matière d'ensimage comprend en outre des fonctionnalités époxy.

3. Matériau composite suivant la revendication 1 ou 2, caractérisé en ce que le polymère alternant et linéaire est un copolymère de l'éthène et du monoxyde de carbone, ou un terpolymère possédant la formule récurrente suivante :
--[-CO-(-CH₂CH₂-)-]ₓ----[--CO-(-G-)-]_{y} -- (I)
dans laquelle G représente un groupement d'un second hydrocarbure à insaturation éthylénique comportant au moins trois atomes de carbone, polymérisé par l'intermédiaire de son insaturation éthylénique et y:x ≤ 0,5.

4. Matériau composite suivant la revendication 3, caractérisé en ce qu'il comprend également un polymère acide partiellement neutralisé au zinc, au magnésium, ou au calcium, contenant des groupements d'une α-oléfine et d'un acide carboxylique α,β-éthyléniquement insaturé.

5. Matériau composite suivant la revendication 4, caractérisé en ce que le polymère acide est un polymère de l'éthène et d'un acide carboxylique α,β-éthyléniquement insaturé comptant jusqu'à 4 atomes de carbone inclusivement.

6. Matériau composite suivant la revendication 4 ou 5, caractérisé en ce que les radicaux acide carboxylique du polymère acide sont neutralisés à raison de 10 à 90% par des ions zinc, magnésium ou calcium.

7. Matériau composite suivant l'une quelconque des revendications 4 à 6, caractérisé en ce que le polymère acide partiellement neutralisé y est présent en une quantité comprise entre 0,01 et 10% en masse, sur base de la masse totale du polymère acide partiellement neutralisé et du polymère alternant et linéaire.

8. Matériau composite suivant l'une quelconque des revendications 1 à 7, caractérisé en ce qu'il comprend entre 1% et 45% en masse des fibres de verre de renforcement, sur base de la masse totale du matériau composite.

9. Procédé de fabrication d'un matériau composite thermoplastique renforcé, caractérisé en ce que l'on mélange un polymère alternant et linéaire d'au moins un composé à insaturation éthylénique et du monoxyde de carbone, possédant un indice de viscosité limite compris entre 0,8 et 1,35 dl/g, tel que mesuré dans le m-crésol à 60°C et un renforcement de fibres de verre possédant un revêtement d'une matière d'ensimage et on convertit le mélange en un matériau composite renforcé par application de chaleur et/ou de pression, où la matière d'ensimage comprend à la fois des fonctionnalités aminosilane et des fonctionnalités polyuréthanne.
